# DEMANDE DE BREVET EUROPEEN

(11) **EP 1 118 803 A2**
(43) Date de publication de la demande: **25.07.2001**
(21) Numéro de dépôt: 01400077.2
(22) Date de dépôt: 12.01.2001
(51) Int. Cl.: F16H 63/18

(54) **Barrillet de commande pour boîte de vitesses et boîte de vitesses équipée d'un tel barillet**

(30) Priorité: 14.01.2000 FR 0000442
(71) Demandeur: Renault, 92100 Boulogne Billancourt (FR)
(72) Inventeur: Trouve, Renaud, 92120 Montrouge (FR)

(57) **Abrégé**

L'invention propose un barillet de commande séquentielle de vitesses pour véhicule automobile, comportant au moins deux pistes de guidage (24, 26, 28) circulaires de doigts de commande (18, 20, 22) de fourchette qui présentent chacune deux chicanes (34, 36, 40, 42, 46, 50) opposées permettant de dévier un doigt de part et d'autre d'une position axiale de point mort de façon à déclencher le crabotage de l'un ou l'autre de deux pignons de vitesse de rangs consécutifs au passage d'une chicane en regard devant ce doigt, caractérisé en ce qu'au moins une chicane d'une des pistes du barillet présente des moyens de guidage sélectif du doigt de commande permettant d'éviter le déport de ce doigt dans la chicane lorsque le barillet tourne dans un sens déterminé.

## Description

L'invention concerne la commande séquentielle des vitesses dans une boîte de vitesses de véhicule automobile à arbres parallèles et à engrenages.

Plus précisément, elle a pour objet un barillet de commande séquentielle des vitesses pour véhicule automobile comportant au moins deux pistes circulaires de guidage des doigts de commande des fourchettes, qui présentent chacune deux chicanes opposées permettant de dévier un doigt de part et d'autre d'une position axiale de point mort de façon à déclencher le crabotage de l'un ou l'autre des deux pignons de vitesse de rang consécutif au passage d'une chicane devant ce doigt.

L'invention porte également sur une boîte de vitesses munie d'une barillet de ce type.

On connaît de nombreux systèmes de commande de vitesses à barillets.

En règle générale, la montée ou la descente des rapports de telles boîtes s'effectuent rapport par rapport en crabotant tous les rapports.

Ainsi, un conducteur qui désire passer d'un rapport de rang courant à un rapport distant de deux rangs du rapport courant doit nécessairement craboter le rapport qui est consécutif au rapport courant, dans le sens de passage désiré, avant de pouvoir passer de celui-ci au rapport de deux rangs distant du rapport courant.

Ceci présente un inconvénient dans le cas d'une utilisation "sportive" de la boîte, ou dans une situation d'urgence, comme par exemple lorsque le conducteur doit rétrograder pour bénéficier de toute la puissance du frein moteur du véhicule, car le conducteur ne peut effectuer de saut de rapport. Le temps de passage du rapport courant au rapport distant de deux rangs du rapport courant se trouve ainsi considérablement allongé par le crabotage du rapport intermédiaire.

Pour remédier à cet inconvénient, l'invention propose de sauter, lorsqu'on le souhaite, le crabotage du rapport intermédiaire.

Dans ce but, elle prévoit qu'au moins une chicane d'une des pistes du barillet présente des moyens de guidage sélectif du doigt de commande permettant d'éviter le déport de ce doigt dans la chicane lorsque le barillet tourne dans un sens déterminé.

Selon un mode de réalisation préférentiel de l'invention, les moyens de guidage comportent un pêne escamotable qui s'efface devant un doigt de commande de fourchette dans un sens de rotation déterminé du barillet, de façon à empêcher ce doigt de s'engager dans la chicane, tout en imposant à ce doigt son engagement dans la même chicane lorsque le barillet tourne en sens opposé.

Ce pêne peut par exemple basculer sur le barillet autour d'un pivot et être rappelé par un ressort dans une position de repos.

Selon un autre mode de réalisation, supposant que le rapport qu'on quitte et le rapport qu'on veut sauter soient commandés par des chicanes d'une même piste, les moyens de guidage associés à celle-ci comportent une déviation permettant au doigt de commande d'éviter une des chicanes dans un sens de rotation du barillet, et un élément de guidage fixe par rapport au barillet imposant au doigt son engagement dans la chicane lorsque le barillet tourne en sens opposé.

Cette chicane peut alors déboucher à l'une de ses extrémités dans la voie moyenne du point mort de la piste et à son autre extrémité dans la déviation.

L'invention a également pour objet une boîte de vitesses équipée d'un tel barillet, dont la rotation peut être commandée, soit en réponse à l'actionnement d'un organe de commande impulsionnel par le conducteur, soit automatiquement par un calculateur électronique.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un barillet de commande d'une boîte de vitesses réalisée selon un état antérieur de la technique,
- la figure 2 est une vue développée des pistes qui sont agencées à la périphérie du barillet de commande de la boîte de vitesses de la figure 1,
- la figure 3 est une vue en perspective d'un barillet de commande d'une boîte de vitesses réalisée selon l'invention,
- la figure 4 une vue développée des pistes qui sont agencées à la périphérie du barillet de la figure 3,
- les figures 5a à 5c illustrent des positions successives d'un doigt de commande d'une fourchette de la boîte de vitesses dans une piste de ce barillet au cours d'un saut de rapport,
- la figure 5d illustre le crabotage du rapport préalablement sauté comme décrit aux figures 5a à 5c,
- les figures 6a et 6b relatives au second mode de réalisation du barillet montrent des positions successives du doigt de commande de la fourchette de la boîte de vitesses dans la piste au cours du saut de rapport,
- la figure 6c illustre le crabotage du rapport préalablement sauté comme décrit aux figures 6a et 6b.

Dans la description qui va suivre, des chiffres de référence identiques désignent des pièces identiques ou ayant des fonctions similaires.

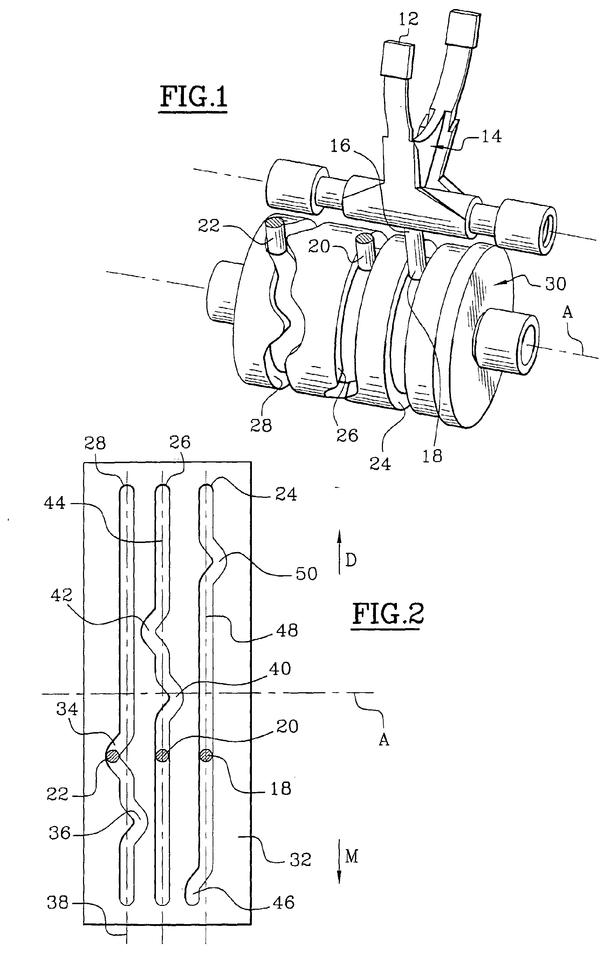

On a représenté à la figure 1 une partie des moyens 10 de commande d'une boîte de vitesses (non représentée) à commande dite séquentielle pour véhicule automobile.

De manière connue, une telle boîte de vitesses comporte des arbres parallèles, notamment au moins un arbre primaire et un arbre secondaire parallèles, et ces arbres portent au moins quatre pignons fous associés à quatre rapports consécutifs de marche avant, chaque pignon fou d'un'arbre engrenant en permanence avec un pignon fixe de l'autre arbre et étant susceptible d'être craboté sur son arbre par un dispositif de crabotage axial associé.

En particulier, la plupart des boîtes de vitesses conventionnelles comportent cinq rapports de marche avant et un rapport de marche arrière, qui sont obtenus par crabotage de six pignons fous associés.

Les pignons fous sont groupés par paires et les deux pignons fous de chaque paire sont susceptibles d'être crabotés sélectivement par un dispositif associé double de crabotage qui comporte un baladeur mobile axialement entre deux positions extrêmes et opposées qui correspondent chacune au crabotage de l'un des deux pignons fous.

Ainsi, un premier baladeur est susceptible de réaliser le crabotage de l'un ou l'autre des pignons fous associés aux premier et deuxième rapports de marche avant, un deuxième baladeur est susceptible de réaliser le crabotage de l'un ou l'autre des pignons fous associés aux troisième et quatrième rapports de marche avant, et un troisième baladeur est susceptible de réaliser le crabotage de l'un ou l'autre des pignons fous associés au cinquième rapport de marche avant et au rapport de marche arrière.

Comme l'illustre la figure 1, le baladeur associé à chaque paire de pignons fous est actionné par une extrémité 12 d'une fourchette 14 dont l'autre extrémité 16 opposée comporte un doigt. Sur la figure 1, on a représenté trois doigts 18, 20, et 22 associés chacun à une fourchette du type de la fourchette 14, chacun de ces doigts étant reçu radialement dans une piste circulaire associée 24, 26, et 28 d'un barillet 30 cylindrique de commande dont l'axe A de rotation est parallèle aux arbres de la boîte de vitesses.

La rotation du barillet 30 autour de son axe A est commandée par exemple par un actionneur rotatif piloté par un module électronique de commande (non représenté) en réponse à l'actionnement par le conducteur du véhicule d'un levier de changement des rapports de la boîte de vitesses ou sur ordre du calculateur, et est susceptible de guider sélectivement les doigts 18, 20 ou 22 dans des chicanes des pistes périphériques 24, 26 ou 28 pour provoquer des mouvements axiaux des doigts 18, 20 ou 22, ces mouvements étant destinés à provoquer le crabotage de l'un ou l'autre des deux pignons fous associés à chaque doigt 18, 20 ou 22.

On a représenté à la figure 2 la surface cylindrique 32 du barillet 30, développée suivant un plan. La surface 32 comporte, à titre d'exemple, de la gauche vers la droite de la figure 2, une piste 28 qui est associée aux premier et deuxième rapports de marche avant, une piste 26 qui est associée aux troisième et quatrième rapports de marche avant, et une piste 24 qui est associée au cinquième rapport de marche avant et au rapport de marche arrière.

La piste 28 comporte deux chicanes 34 et 36 qui s'écartent axialement de part et d'autre d'une voie 38 transversale moyenne de point mort de la piste 28 pour provoquer un mouvement axial du doigt 22 destiné à provoquer le crabotage de l'un ou l'autre des pignons fous des premier et deuxième rapports de marche avant. La chicane 36 est par exemple destinée, au cours de la rotation du barillet 30, à recevoir le doigt 22 pour le guider selon un mouvement axial vers la droite correspondant au crabotage du premier rapport de marche avant. La chicane 34 est par exemple destinée, au cours de la rotation du barillet 30, à recevoir le doigt 22 pour le guider selon un mouvement axial vers la gauche correspondant au crabotage du deuxième rapport de marche avant.

D'une façon analogue, la piste 26 comporte deux chicanes 40 et 42 qui s'écartent axialement de part et d'autre d'une voie 44 transversale moyenne de point mort de la piste 26 pour provoquer un mouvement axial du doigt 20 destiné à provoquer le crabotage de l'un ou l'autre des pignons fous des troisième et quatrième rapports de marche avant. La chicane 40 est par exemple destinée, au cours de la rotation du barillet 30, à recevoir le doigt 20 pour le guider selon un mouvement axial vers la droite correspondant au crabotage du troisième rapport de marche avant. La chicane 42 est par exemple destinée, au cours de la rotation du barillet 30, à recevoir le doigt 20 pour le guider selon un mouvement axial vers la gauche correspondant au crabotage du quatrième rapport de marche avant.

Enfin, la piste 24 comporte deux chicanes 46 et 50 qui s'écartent axialement de part et d'autre d'une voie 48 transversale moyenne de point mort de la piste 26 pour provoquer un mouvement axial du doigt 18 destiné à provoquer le crabotage de l'un ou l'autre des pignons fous du cinquième rapport de marche avant et du rapport de marche arrière. La chicane 50 est par exemple destinée, au cours de la rotation du barillet 30, à recevoir le doigt 18 pour le guider selon un mouvement axial vers la droite correspondant au crabotage du cinquième rapport de marche avant et la chicane 46 est par exemple destinée, au cours de la rotation du barillet 30, à recevoir le doigt 18 pour le guider selon un mouvement axial vers la gauche correspondant au crabotage du rapport de marche arrière.

Toutes les chicanes sont agencées suivant des positions décalées angulairement autour de l'axe A les unes par rapport aux autres à la périphérie du barillet 30, de façon à provoquer le crabotage successif de tous les rapports au fur et à mesure de la rotation du barillet 30 en n'engageant, pour chaque position angulaire, qu'un seul des doigts 18, 20, ou 22 dans une chicane 46, 50, 40, 42, 36, ou 34 déterminée.

Pour effectuer une montée des rapports, en partant d'une position angulaire du barillet 30 dans laquelle le doigt 18 est engagé dans la chicane 46 de crabotage du rapport de marche arrière, une rotation du barillet dans le sens de montée des rapports indiqué par la flèche M de la figure 2 provoque successivement l'engagement du doigt 22 dans la chicane 36 du premier rapport de marche avant puis dans la chicane 34 du deuxième rapport de marche avant, l'engagement du doigt 20 dans la chicane 40 du troisième rapport de marche avant puis dans la chicane 42 du quatrième rapport de marche avant, et enfin l'engagement du doigt 18 dans la chicane 50 du cinquième rapport de marche avant.

Réciproquement, la descente des rapports s'effectue en entraînant le barillet 30 en rotation dans le sens de la flèche D de la figure 2.

Pour un sens de rotation déterminé du barillet 30, le passage d'un rapport de rang courant à un rapport distant de deux rangs du rapport courant ne peut s'effectuer directement et nécessite, parfois inutilement, de craboter puis de décraboter le rapport intermédiaire suivant le rapport de rang courant.

Cette conception n'est pas satisfaisante, puisqu'elle augmente considérablement le temps de passage du rapport de rang courant au rapport distant de deux rangs du rapport courant.

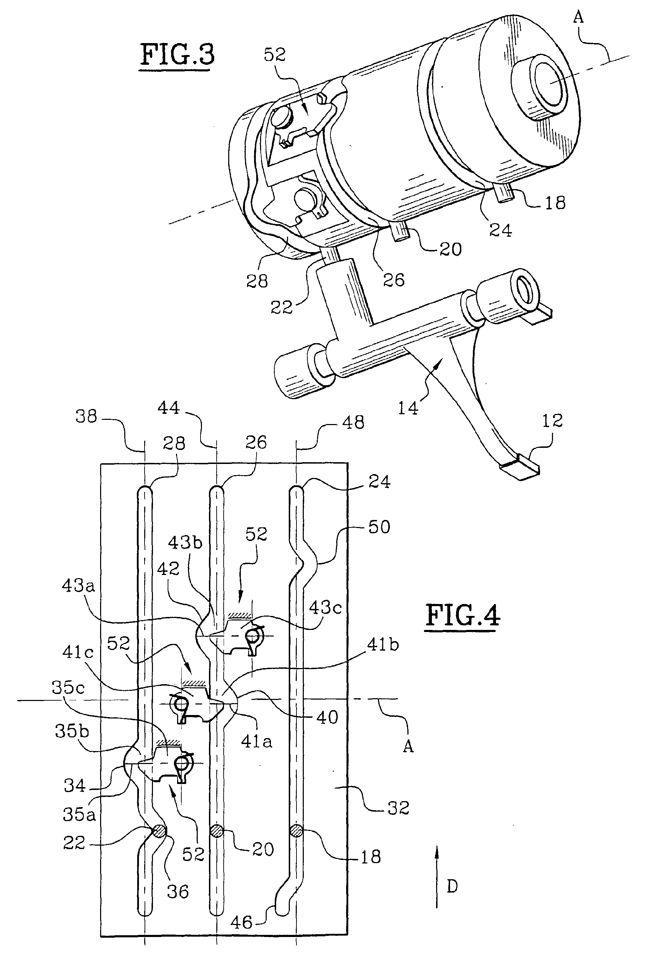

Pour remédier à cet inconvénient, l'invention propose un barillet 30 de commande tel que décrit en référence aux figures 3 à 6c.

Comme l'illustre la figure 3, les moyens de commande de la boîte de vitesses selon l'invention comportent, d'une façon analogue à l'état antérieur de la technique, des baladeurs (non représentés) qui sont associés à chaque paire de pignons fous et qui sont actionnés par des extrémités 12 de fourchettes 14 dont les extrémités 16 opposées comportent chacune un doigt.

Conformément à l'invention, au moins une piste circulaire 26 ou 28 du barillet 30 comporte des moyens de guidage sélectif 52 qui permettent, à partir d'un rapport de marche avant courant de rang déterminé, et uniquement lors de la rotation du barillet dans un sens déterminé, d'empêcher le doigt 20 ou 22 associé à la piste 26 ou 28 de pénétrer dans la chicane qui est associée au crabotage du rapport suivant d'un rang le rapport courant dans le sens de rotation du barillet 30 pour éluder le crabotage de ce rapport suivant, notamment afin de réaliser un saut de ce rapport suivant.

Plus particulièrement, selon le premier mode de réalisation illustré par les figures 3 à 5c, les moyens de guidage sélectif 52 permettent, à partir d'un rapport de marche avant de rang courant déterminé, de sauter le rapport de rang immédiatement inférieur, notamment afin d'engager le rapport inférieur de deux rangs du rapport courant de rang déterminé.

Cette disposition n'est pas limitative de l'invention, et les moyens de guidage 52 pourraient être destinés à sauter certains rapports dans le sens de la montée des rapports.

La disposition qui va être décrite en référence aux figures 3 à 5c correspond toutefois au mode de réalisation préféré de l'invention car elle permet au conducteur du véhicule de rétrograder rapidement afin de ralentir efficacement le véhicule, notamment comme il peut être amené à le faire dans le cadre d'une utilisation sportive ou pour obtenir une forte décélération de celui-ci en le ralentissant à l'aide du frein moteur.

Dans le cas particulier d'une boîte de vitesses à cinq rapports de marche avant et un rapport de marche arrière, la boîte de vitesses comporte un moyen de guidage 52 qui permet d'empêcher le doigt 20 de pénétrer dans la chicane 42 correspondant au quatrième rapport de marche avant, un moyen mécanique 52 qui permet d'empêcher le doigt 20 de pénétrer dans la chicane 40 correspondant au troisième rapport de marche avant, et un moyen de guidage 52 qui permet d'empêcher le doigt 22 de pénétrer dans la chicane 34 correspondant au deuxième rapport de marche avant.

Conformément à l'invention, chacune de ces chicanes 42, 40 ou 34 comporte une voie 43a, 41a; ou 35a de crabotage associée qui s'écarte axialement de la voie transversale moyenne associée 44 ou de la voie 38 moyenne de point mort et comporte un évidement 43b, 41b, ou 35b qui s'étend dans le prolongement de la voie transversale 44 ou de la voie 38 moyenne de point mort.

Chaque chicane 42, 40 ou 34 comporte un pêne escamotable associé 43c, 41c, ou 35c qui, à partir d'une position de repos, représentée à la figure 4 et dans laquelle il obstrue seulement l'évidement 43b, 41b, ou 35b associé, est susceptible, lorsque le barillet tourne dans le sens D de rotation de descente des rapports (indiqué par la flèche de la figure 4), de s'effacer devant le doigt 20 ou 22 considéré suivant une position escamotée pour éluder le crabotage du quatrième, troisième ou deuxième rapport associé à la chicane 42, 40 ou 34 respectivement.

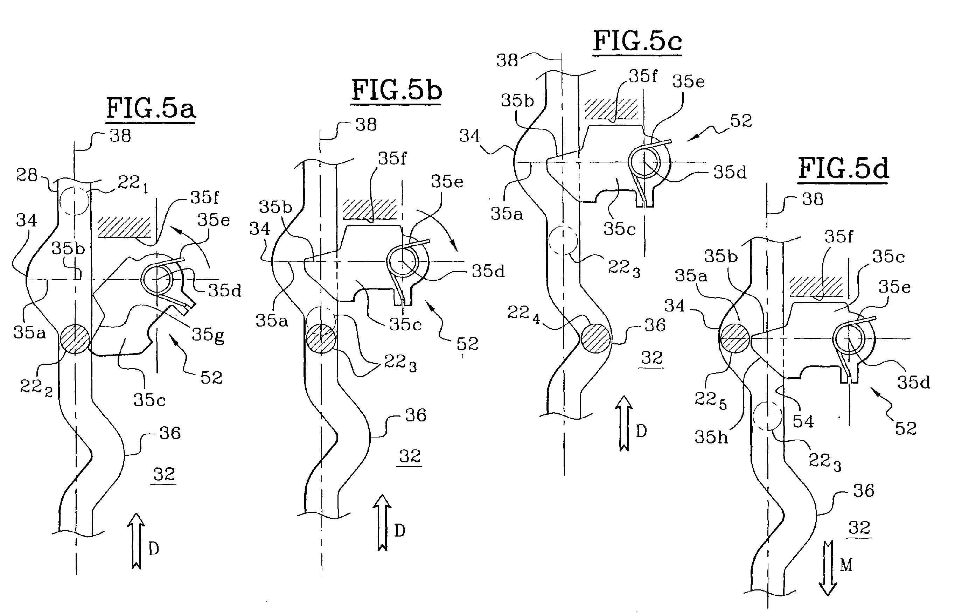

Un exemple du fonctionnement d'un pêne escamotable 35c est représenté en référence aux figures 5a à 5d.

Comme l'illustre la figure 5a, la piste 28 reçoit en coulissement le doigt 22 et comporte la chicane 34 associée au crabotage du deuxième rapport de marche avant et la chicane 36 associée au crabotage du premier rapport de marche avant.

La chicane 34 associée au crabotage du deuxième rapport de marche avant comporte, dans sa partie à gauche de la figure 5a, la voie 35a de crabotage qui est susceptible de provoquer un déplacement axial vers la gauche du doigt 22 pour provoquer le passage du deuxième rapport de marche avant.

La chicane 34 comporte, à droite de la voie 35a de crabotage et dans le prolongement de la voie 38 moyenne de point mort, un évidement 35b.

Par ailleurs, elle présente un pêne 35c basculant sur le barillet 30 autour d'un pivot 35d.

Dans la position de repos du pêne 35c qui est par exemple illustrée aux figures 5b à 5d, celui-ci obstrue l'évidement 35b.

Lorsque le barillet 30 quitte une position angulaire correspondant au crabotage du troisième rapport de marche avant, le doigt 20, décrit précédemment en référence à la figure 4, quitte la chicane 40 et le doigt 22 approche de la chicane 34 associée au passage du deuxième rapport de marche avant, comme illustré à la figure 5a par sa position 22₁.

Le pêne 35c est formé d'une plaque qui est articulée par un pivot 35d à la périphérie 32 du barillet et qui est rappelée en position de repos par un ressort spiral 35e, en appui contre une butée 35f qui s'étend radialement à partir de la surface 32 du barillet.

Lorsque le barillet 30 est entraîné en rotation dans le sens D de la descente des rapports, le doigt 22 repousse une face 35g du pêne 35c, qui s'efface devant le doigt 22 sans le dévier de la voie moyenne 38 de la piste 28, comme représenté par la position 22₂ du doigt 22.

Puis, la rotation du barillet 30 se poursuivant dans le même sens D, tandis que le pêne 35c est rappelé élastiquement par le ressort 35e à l'encontre de la butée 35f, le doigt 22 poursuit sa trajectoire suivant la voie moyenne 38 de la piste 28 et occupe par exemple une position 22₃ représentée à la figure 5b.

Dès lors, si la rotation du barillet 30 se poursuit dans le sens D de la descente des rapports, le doigt 22 est susceptible d'occuper une position 22₄ de crabotage du premier rapport de marche avant dans la chicane 36 associée au premier rapport de marche avant comme illustré en figure 5c.

En revanche, si le conducteur du véhicule commande le passage du deuxième rapport de marche avant, le module électronique commande l'inversion du sens de rotation du barillet 30 dans le sens de la montée des rapports qui est représenté par la flèche M de la figure 5d.

Avantageusement, le passage du deuxième rapport de marche avant s'effectue à partir de la position 22₃ du doigt 22. L'inversion du sens de rotation du barillet 30 est commandée à partir de cette position 22₃ sans que le doigt 22 n'ait atteint la position 22₄ de passage du premier rapport de marche avant.

Comme l'illustre la figure 5d, du fait de l'inversion du sens de rotation du barillet 30, le doigt 22 rencontre alors une rampe 35h inclinée du pêne 35c qui, dans la position de repos du pêne 35c vers laquelle il a été rappelé élastiquement, affleure radialement au-dessus d'un bord 54 de la voie 38 transversale moyenne qui est opposé axialement à la voie 35a de crabotage de la chicane 34, et qui rejoint ladite voie 35a de crabotage de la chicane 34.

La rampe inclinée 35h du pêne 35c assure un guidage du doigt 22 vers la voie 35a de crabotage de la chicane 34, ce qui lui permet d'occuper une position 22₅ dans laquelle il commande avantageusement le crabotage du deuxième rapport de marche avant.

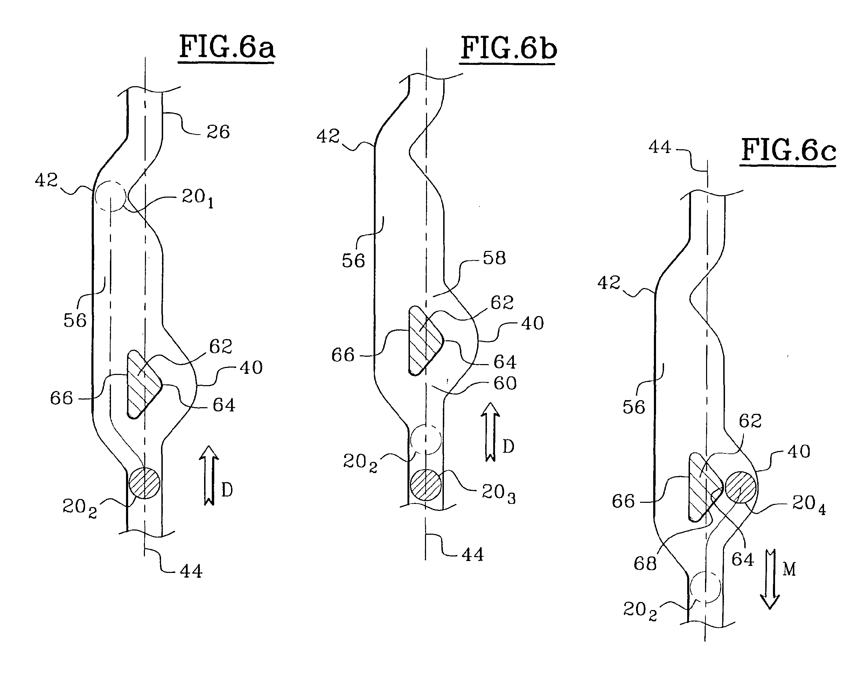

Les figures 6a à 6c illustrent un second mode de réalisation de l'invention qui est destiné à permettre, à partir d'un rapport de rang courant, le saut d'un rapport de rang immédiatement inférieur au rapport de rang courant, dans le cas particulier où les chicanes de commande de passage de ces rapports sont sur une même piste.

Pour sauter le troisième rapport de marche avant, les moyens de guidage sélectif 52 de la piste 26 comportent une déviation 56 de la piste 26 qui relie la chicane 42 associée au rapport quatrième courant et la voie 44 transversale moyenne de point mort au delà de la chicane 40 associée au troisième rapport de marche avant suivant dans le sens de descente des rapports représenté par la flèche D illustrant la sens de rotation du barillet 30.

De la sorte, le doigt 20 occupant initialement la position 20₁ de crabotage du quatrième rapport de marche avant, il est susceptible (comme illustré à la figure 6a), de glisser le long de la déviation 56, puis d'être ramené selon une position intermédiaire 20₂ dans la piste 26 le long de la voie moyenne 44 de celle-ci en évitant la chicane 40 de crabotage du troisième rapport de marche avant.

Dès lors, si le module électronique commande la poursuite de la rotation du barillet 30 suivant le sens D de descente des rapports, le doigt 20 occupe une position 20₃ dans laquelle il demeure dans voie 44 de point mort de la piste 26 comme illustré à la figure 6b, le doigt 22 commandant le passage des rapports de rang inférieur.

En revanche, si le conducteur du véhicule désire passer le troisième rapport de marche avant, le module électronique commande l'inversion du sens de rotation du barillet 30, comme illustré par la flèche M de montée des rapports de la figure 6c.

La chicane 40 associée au troisième rapport de marche avant débouche à ses extrémités 58 et 60 respectivement dans la déviation 56 et dans la voie 44 transversale moyenne de point mort pour permettre le crabotage du troisième rapport de marche avant en commandant la rotation inverse du barillet 30.

A cet effet, un élément 62 de guidage fixe par rapport au barillet est interposé axialement en regard de la chicane 40 du troisième rapport de marche avant entre celle-ci et la déviation 56. L'élément 62 présente une forme sensiblement triangulaire dont le sommet 64 est tourné vers la chicane 40 du troisième rapport de marche avant et dont la base 66 est agencée dans le prolongement de la déviation 56.

La base 66 de l'élément 62 permet d'assurer le guidage du doigt 20 dans la déviation dans le sens D de la descente des rapports, et permet, comme elle est agencée dans le prolongement de la déviation 56, d'empêcher le doigt 20 de retourner dans la déviation 56 lorsque le barillet 30 est commandé dans le sens de rotation inverse M.

Un côté 68 de l'élément de guidage 62, formant rampe inclinée, permet alors, comme l'illustre la figure 6c, de guider le doigt 20 vers la chicane du troisième rapport de marche avant pour réaliser le crabotage de ce rapport.

L'invention permet de disposer d'une boîte de vitesses à commande dite séquentielle qui permet d'effectuer des rétrogradages rapides, ce qui améliore sensiblement les conditions de sécurité de fonctionnement du véhicule équipé d'une telle boîte.

## Revendications

1. Barillet de commande de vitesses pour véhicule automobile, comportant au moins deux pistes de guidage (24, 26, 28) circulaires de doigts de commande (18, 20, 22) de fourchette qui présentent chacune deux chicanes (34, 36, 40, 42, 46, 50) opposées permettant de dévier un doigt de part et d'autre d'une position axiale de point mort de façon à déclencher le crabotage de l'un ou l'autre de deux pignons de vitesse de rangs consécutifs au passage d'une chicane en regard devant ce doigt, du type dans lequel au moins une chicane d'une des pistes du barillet présente des moyens de guidage sélectif du doigt de commande permettant d'éviter le déport de ce doigt dans la chicane lorsque le barillet tourne dans un sens déterminé, caractérisé en ce que les moyens de guidage (52) d'une piste (28) comportent un pêne escamotable (35c) qui s'efface devant un doigt de commande (22) dans un sens de rotation déterminé du barillet de façon à éviter audit doigt de s'engager dans une chicane (34), et qui impose audit doigt son engagement dans la même chicane dans le sens de rotation opposé.

2. Barillet selon la revendication précédente, caractérisé en ce que le pêne (35) bascule sur le barillet (30) autour d'un pivot (35d), en étant rappelé par un ressort (35ₑ) dans une position de repos.

3. Barillet selon la revendication 1 ou 2, caractérisé en ce que le pêne présente une rampe inclinée (35h) imposant l'engagement du doigt (22) dans la chicane (34) dans ledit sens de rotation opposé.

4. Barillet selon l'une quelconque des revendications précédentes, caractérisé en ce qu'il comporte une piste de commande (28) d'une fourchette associée aux deux premiers rapports de marche avant, une piste de commande (26) associée aux deux rapports suivants, et une piste de commande (24) associée au dernier rapport de marche avant et à la marche arrière.

5. Boîte de vitesses comportant un barillet selon l'une quelconque des revendications précédentes, caractérisée en ce que la rotation du barillet est commandée en réponse à l'actionnement d'un organe de commande impulsionnel des changements de rapport par le conducteur.

6. Boîte de vitesses comportant un barillet selon l'une des revendications 1 à 4, caractérisé en ce que la rotation du barillet est commandée automatiquement par un calculateur électronique.
